# EUROPEAN PATENT SPECIFICATION

(11) **EP 1 686 752 B1**
(45) Date of publication and mention of the grant of the patent: **03.12.2008**
(21) Application number: 04789901.8
(22) Date of filing: 29.10.2004
(51) Int. Cl.: H04L 29/06

(54) **A METHOD FOR ACHIEVING THE MULTIMEDIA PRIORITY SERVICES**
VERFAHREN ZUR SCHAFFUNG VON PRIORITÄTSBASIERTEN MULTIMEDIADIENSTEN
PROCEDE PERMETTANT D'OBTENIR DES SERVICES MULTIMEDIA PRIORITAIRES

(30) Priority: 11.12.2003 CN 200310121310
(43) Date of publication of application: 02.08.2006
(73) Proprietor: Huawei Technologies Co., Ltd., Longgang District, Shenzhen, Guangdong 518129 (CN)
(72) Inventor: WANG, Jie Huawei Administration Building, Shenzhen Guangdong 518129 (CN)
(74) Representative: Manitz, Gerhart
(86) International application number: PCT/CN2004/001242
(87) International publication number: WO 2005/057872

(56) References cited:
- EP-A- 1 032 236
- WO-A-02/067605
- CN-A- 1 167 559
- CN-A- 1 172 403
- CN-A- 1 390 013
- US-A- 6 118 778
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-SA2, no. V5100, September 2003 (2003-09), XP014016498 ISSN: 0000-0001

## Description

### Field of the Technology

The present invention relates to multimedia service processing technology, and more particularly to a method for achieving multimedia priority service.

### Background of the Invention

With mobile users' rising requirement for mobile network's service quality, a common focus of operators is to provide different service qualities to different target mobile user groups. Priority service has become an effective measure for more operators to raise their customer satisfaction. Priority service refers to when the mobile users are divided into plural priority service classes, the network identifies the priority service and provides priority processing prior to other services according to the mobile user's priority service class when the mobile user applies for this priority service. Priority services sent by mobile users with high priority service class will be processed with high priority when the network is congested or resources are insufficient, so as to meet the requirements of the mobile users with high priority class.

Currently, the voice priority service supported by 3GPP network is achieved with the following solution.

The voice priority service in 3GPP network is a subscription service that does not need the users to actively carry out operations such as register or exit. It is decided by operators or other organizations which mobile users are permitted to use for priority service, and so is the setup of the users' priority classes. The common mobile users' access level defined by the 3GPP is divided into 10 classes numbered from 0~9 and 11~15 are five special access classes respectively defined as mobile network use, security service, public organizations' personnel and operator's internal employees. The access class of every mobile user is stored in the Home Subscriber Server (HSS), and/or in the mobile user's Subscriber ID Module (SIM) as the subscription data of the user.

A mobile user of a priority service class can decide whether to initiate a priority call each time he makes a call. When the mobile user sends a priority call request to a tandem network or receiver network, priority service ID and the mobile user's priority class is carried in the call request message. The 3GPP network decides that it is a priority call according to the priority service ID carried in the call request message, and identifies the mobile user's priority class according to the mobile user's priority class carried in the same message.

When the sender network and the tandem network receive the priority call request, the sender network and tandem network provide special call forwarding capability, and exempt restrictive network management controls, including code control, manual cancel control, auto congestion control, and trunk reserve control, to enhance the probability of completed calls in severe congestion. When there are no free trunk circuits at the tandem network, the calls are queued up according to the priority service classes of the call requests and when there are free trunk circuits at the tandem network, the priority calls are processed successively in a queuing order.

When there are no available wireless channel resources at the sender network, the calls queue up according to their priority classes and arrival time. And when there are available wireless channel resources, the priority calls are processed successively in the queuing order.

The priority services are applicable to all mobile services, but currently the 3GPP network just provides the solution to achieve circuit switch voice priority service. It does not provide the solution to achieve multimedia priority service.

Two parameters associated with priority classes are provided in the header of the multimedia service Session Initiation Protocol (SIP) messages: resource priority class parameter and acceptance priority class parameter. They are mainly used by IP multimedia system emergency call services, and they do not differentiate the classes of the priority services in light of the mobile users of different access classes. Therefore, how to achieve priority services in multimedia businesses is an urgent issue to be solved.

WO 02/067605 A discloses a method for establishing signaling bearer. In this document, an indicator is employed to indicate whether the signaling bearer should be established according to a special QoS. EP 1032236 A also discloses a congestion control method using access classes. However, both the two documents fail to make the UE request a service with desirable priority class.

### Summary of the Invention

In view of the above, the primary object of the present invention is to provide a method to achieve multimedia priority services, so that the 3GPP network is able to provide high quality multimedia services to the users with high priority service classes.

In light of the above objective, the present invention's specific technical solution is achieved as follows:

A method to achieve multimedia priority services comprises:
the UE initiates an SIP service request carrying a priority service ID to a Call Session Control Function (CSCF);
the CSCF receives the SIP service request, provides services for the UE according to the first priority service class if the SIP service request carries the priority service ID and does not carry a second priority service class; or provides services for the UE according to the second priority service class if the SIP service request carries the priority service ID and the second priority service class.

A Call Session Control Function, CSCF, for achieving multimedia priority service comprises: a first unit, configured to receive an SIP service request carrying a priority service ID from a UE; and a second unit, configured to provide services for the UE according to a first priority service class preset if the SIP service request carries the priority service ID and does not carry a second priority service class; or provides services for the UE according to the second priority service class if the SIP service request carries the priority service ID and the second priority service class.

A system for achieving multimedia priority service includes a UE, wherein the UE is configured to communicate with a CSCF described above, and the UE includes: a first unit, configured to send a SIP service request carrying a priority service ID to a CSCF.

It can be seen from the above solution that, the present invention provides a solution to achieve multimedia priority services. When a UE initiates an SIP service request carrying priority service ID, the CSCF knows that the UE initiates a multimedia priority service. If the SIP service request further carries the priority service class of the UE, the CSCF can get the priority service class of the UE from the SIP service request. And if the SIP service request does not carry the priority service class of the UE, CSCF can get the priority service class of the UE stored in advance from the HSS. The CSCF decides processing method of the SIP service request according to the priority service class of UE that sends the SIP service request. Therefore, the solution of the present invention achieves multimedia priority services, so that the 3GPP network is able to provide high quality multimedia services to the users with high priority service classes.

### Brief Description of the Drawings

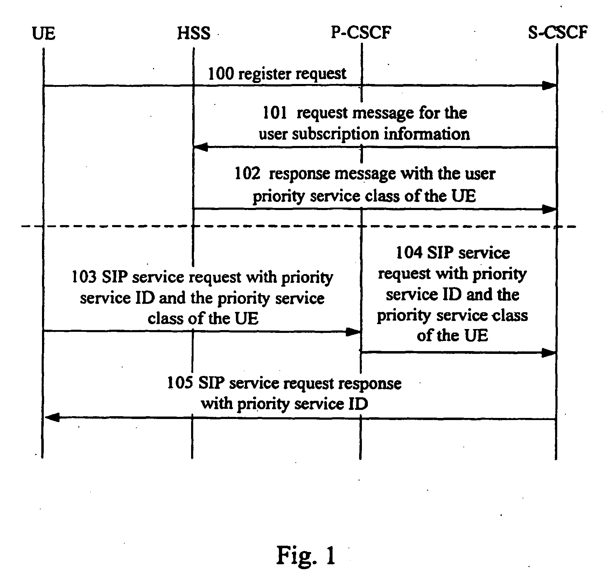

Fig. 1 is a flowchart illustrating a UE achieving multimedia priority services according to an embodiment of the present invention.

### Detailed Description of the Invention

The present invention is explained in detail with reference to preferred embodiments and the accompanying drawing, so as to provide an explicit presentation of the present invention's object, technical solution and advantages.

The present invention sets up priority service classes in advance for the multimedia service mobile users: the priority service classes of the UE of mobile users do not demand active setup and cancel operations of mobile users; instead, the priority service classes of mobile users are decided by the operators or other organizations. The priority services of the UE of common mobile users are divided into 0~10 classes, and 11~15 are five special access classes respectively defined as mobile network use, security service, public organizations' personnel, emergency services and operator's internal employees. The priority service class of every UE of mobile users is stored in the HLR, and/or in the SIM card of the mobile user's UE as the subscription data of the user.

The mobile users with different priority service classes can decide whether to use priority services for each multimedia service. If a mobile user decides to use a priority service, the UE of the user sends an SIP service request message to request SIP service, with the mobile user's priority service ID in the SIP service request message header. The CSCF which receives the service request message knows that the UE initiates a priority service according to the priority service ID carried in the SIP service request message after receiving the message. The CSCF carries out special processing of the SIP service request message initiated by the UE according to the priority service class of the UE after the CSCF obtains the priority service class of the UE, so as to enhance the probability of successful access to the multimedia service of the UE. If the mobile user decides not to use the priority service, the UE will access to the multimedia service conventionally, according to the existing technological solution.

When the CSCF receives an SIP service request carrying priority service ID sent by the UE, if there is no available wireless channel resource, the CSCF lists the request in queue according to the priority service class of the UE that sends the SIP service request, and when there are available wireless channel resources, it carries out processing of the SIP service requests from the queue.

The CSCF in the present invention can include P-CSCF, S-CSCF and I-CSCF; or just S-CSCF and P-CSCF, or just P-CSCF solely.

Fig. 1 is a flowchart for the UE to achieve multimedia priority services according to an embodiment of the present invention. As is shown in Fig. 1, the preset priority service class of the UE is not only stored in the HSS, but also in SIM card. The functions to achieve multimedia priority services include: UE, P-CSCF, S-CSCF and HSS. The specific process comprises the steps of:
Step 100: the UE sends an SIP register request to S-CSCF via P-CSCF;
Step 101: the S-CSCF sends to the HSS a request message for the user subscription information after receiving the register request;
Step 102: the HSS returns a response message to the S-CSCF after receiving the request message, with the user priority service class of the UE carried in the response message;
Step 103: the UE sends an SIP service request to the P-CSCF , with priority service ID and the priority service class of the UE carried in the request; and wherein, the priority service class of the UE is obtained from the SIM;
Step 104: the P-CSCF identifies the priority service ID in the SIP service request and saves the priority service class of the SIP service request; the P-CSCF decides whether it has available resources, and if yes, it carries out processing according to the conventional flow of the existing technological solution. Otherwise, it regards P-CSCF as being congested and carries out special processing of the SIP service request;
The P-CSCF sends an SIP service request message to the S-CSCF after it carries out processing of the SIP service request, with priority service ID and the priority service class carried in the request message;
Step 105: the S-CSCF identifies the priority service ID and the priority service class in the SIP service request, and compares the priority service class obtained from the SIP services request to the priority service class of the UE obtained from the HSS in advance; if they are identical, decides whether the S-CSCF has available resources, and if yes, carries out processing according to the conventional flow of the existing technological solution. Otherwise, the S-CSCF regards the S-CSCF as being congested and carries out special processing of the SIP service request. If the priority service classes are not identical, returns an SIP service request fail response message to the UE and discards the SIP service request.

When the priority service class obtained from the SIP service request and the priority service class of the UE obtained from the HSS in advance are not identical, the S-CSCF can also carry out associated processing of the SIP service request according to the priority service class of the UE obtained from the HSS, i.e., the S-CSCF decides whether it has available resources, and if yes, carries out processing according to the conventional flow of the existing technological solution. Otherwise, it regards the S-CSCF as being congested and carries out special processing of the SIP service request.

The S-CSCF sends a response message for the SIP service request to the 3GPP network in which the UE locates after it accomplishes the processing of the SIP service request. The response message includes priority service ID, and can include or exclude the priority service class of the SIP service request.

When the SIP service request initiated by the UE only carries priority service ID without the priority service class of the UE in the process in the above said Step 103, the SIP service request that the P-CSCF sends to the S-CSCF also just carries priority service ID without the priority service class of the UE. In this case, the P-CSCF cannot differentiate the priority classes of the SIP call requests carrying priority service ID, and thus the S-CSCF carries out successive processing according to the priority service class of the UE obtained from the HSS in advance.

The above said SIM card is the general description of the subscriber ID module in UE. It can save 2G mobile network subscription information, 3G mobile network subscription information and also multimedia service subscription information.

When an I-CSCF exists between the P-CSCF and the S-CSCF, the I-CSCF transfers the message it receives from the P-CSCF or the S-CSCF to the other party, and it also transfers the priority service ID and the priority service class of the UE carried in the message. The processing of multimedia priority services carried out by the I-CSCF is the same as that by the P-CSCF and S-CSCF, i.e., it carries out processing according to the conventional flow of the existing technological solution if there are available resources and carries out special processing of the SIP service request when it is congested;

When the UE in the 3GPP network initiates an SIP service request to the CSCF in the called network, with priority service ID and the priority service class of the UE carried in the request, the CSCF in the called network carries out processing of the SIP service request according to the priority service ID and the priority service class of the UE in the SIP service request, and the processing is the same as that of the S-CSCF, the I-CSCF and the C-CSCF, i.e., it carries out processing according to the conventional flow of the existing technological solution if there are available resources, and carries out special processing of the SIP service request when it is congested;

The CSCF, including P-CSCF, I-CSCF and S-CSCF, carries out special processing of the SIP service request carrying priority service ID and the priority service class of the UE when it is congested. The processing is as follows:
(1) If CSCF receives a new service request from a UE which is being engaged and there's no free resource for new request , the CSCF decides whether the priority service class of the UE of the multimedia service in which the UE is being engaged is lower than the priority service class of the UE of the newly received service request, and if yes, ends the low priority class multimedia service in which the UE is being engaged so that the released resources of the CSCF can be applied for processing higher UE priority class SIP service request from the UE. Otherwise, the CSCF lists the received SIP service request in queue and waits for available resources for processing it.
(2) The P-CSCF, the I-CSCF or the S-CSCF lists the SIP service requests in queue according to the arrival time and the priority service class of the SIP service request, and when there are available resources, processes the SIP service request according to the sequential order in the waiting queue and returns to the UE a response for the SIP service request. A timer can be activated for each SIP service request in queue. If the timer is overtime, the CSCF deletes the SIP service request and returns the UE an SIP service request fail response;
   When the SIP service request dose not carry the priority service class of the UE, the I-CSCF and P-CSCF have to list the SIP service requests in queue only according to the arrival time and priority service ID of the SIP service request because the I. CSCF and the P-CSCF cannot communicate with the HSS.
(3) If CSCF in which an active multimedia service exists receives a new service request and there's no free resource for new service request, the CSCF decides whether the priority class of the multimedia service in which the UE is being engaged is lower than the priority service class of the UE of the received SIP service request, and if yes, ends one or multiple ongoing low priority class multimedia service(s) of the user, so that the released resources of the CSCF can be applied for processing higher priority class SIP service request of the UE. Otherwise, the CSCF lists the received SIP service requests in queue and waits for available resources for processing it.

When the UE initiates an SIP service request successfully, and if the UE initiates an SIP service modifying request to the CSCF, since the CSCF has already stored priority service ID, the SIP service modifying request can carry priority service ID or carry no priority service ID. If the CSCF has available resources, it carries out normal processing of the SIP service modifying request according to the existing technology's solution, and if the CSCF is congested, it carries out special processing of the SIP service modifying request and the special processing is identical to the above said special processing of the SIP service request.

When the CSCF charges for the SIP service request, the CSCF charging information shall include the priority service ID information; when the operator charges different priority service classes with different rates, the CSCF charging information also includes the priority service class of the UE. When the operator charges different priority service classes with the same rate the CSCF charging information can include or exclude the priority service class of the UE.

If the CSCF does not support multimedia priority services, i.e., it does not identify priority service ID carried in the SIP service request, it neglects the associated parameters of the priority services and carries out processing of the SIP service request according to the existing technology's solution. If the CSCF does not support special processing of multimedia priority services, it neglects the associated parameters of the priority services and carries out processing of the SIP service request according to the existing technology's solution.

When the 3GPP network that support multimedia priority services is interconnected with external networks, it demands that the interconnecting gateway should be able to support the multimedia priority services and map the user classes in different networks.

## Claims

1. A method for achieving multimedia priority service, **characterized by** comprising:
receiving, by a Call Session Control Function, CSCF, a Session Initiation Protocol, SIP, service request carrying a priority service ID, from a User Equipment, UE;
providing, by the CSCF, services for the UE according to a first priority service class preset if the SIP service request carries the priority service ID and does not carry a second priority service class; or
providing, by the CSCF, services for the UE according to the second priority service class if the SIP service request carries the priority service ID and the second priority service class.

2. The method of claim 1, wherein, the CSCF is a Proxy CSCF, P-CSCF, and/or Service CSCF, S-CSCF, and/or Inquiry CSCF, I-CSCF.

3. The method of claim 2, further comprising:
when the CSCF includes the S-CSCF and the first priority service class of the UE is set in an HSS,
receiving a register request from the UE;
sending a request message for the user subscription information to the HSS;
receiving a user subscription information response message carrying the first priority service class of the UE from the HSS; and
obtaining the first priority service class of the UE from the user subscription information response message.

4. The method of claim 3, wherein, the second priority service class of the UE is set up in a Subscriber ID Module, SIM;
the method further comprising:
comparing the second priority service class of the UE obtained from the SIP service request with the first priority service class of the UE obtained from the HSS to decide whether they are identical;
if they are identical, providing services for the UE according to the first priority service class or according to the second priority service class; and otherwise, returning an SIP service request fail response to the UE and discarding the request, or providing services for the UE according to the first priority service class.

5. The method of claim 1, further comprising:
deciding whether there are available resources, and if yes, carrying out normal processing of the SIP service request; otherwise, providing services for the UE according to the first priority service class or according to the second priority service class.

6. The method of claim 1, wherein, when the CSCF receives multiple SIP services requests carrying the priority service ID, the providing services for the UE comprises:
if the SIP service requests do contain the second priority service classes, listing the SIP service requests in queue according to their arrival time and the second priority service classes,
if the SIP service requests do not contain the second priority service classes, listing the SIP service requests in queue according to their arrival time and the first priority service classes; and
when the CSCF has available resources, providing services for the UE according to the SIP service requests successively in their queue order.

7. The method of claim 5, wherein, a timer is preset, and when the SIP service requests are queued up, the method further comprising:
the timer is activated for each queuing request, and when it is overtime, deleting the related request in queue and returning an SIP service request fail message to the UE that initiates the request.

8. The method of claim 1, wherein, when a SIP service request from a UE is being processed and the CSCF receives a new SIP service request from the UE, and there's no free resource for the new SIP service request, the providing services for the UE comprises:
deciding whether the second priority class of the multimedia service being processed for the UE is lower than the second priority service class of the new SIP service request received from the UE, and
if yes, ending the multimedia service being processed, and using the resources released in the CSCF to process the new SIP service request of the UE; otherwise, listing the new SIP service request into queue and waiting for available resources for processing it.

9. The method of claim 1, wherein, when the CSCF in which an active multimedia service for a first UE exists receives a new SIP service request from a second UE and there's no free resource for the new SIP service request, the providing services for the UE comprises:
deciding whether the priority service class of the first UE is lower than the priority service class of the second UE, and if yes, ending the ongoing multimedia service, and using the resources released in the CSCF to process the new SIP service request of the second UE; otherwise, listing the new SIP service request into queue and waiting for available resources for processing it.

10. The method of claim 1, further comprising:
receiving a service modifying request carrying the priority service ID from the UE;
carrying out priority processing of the modifying request according to the first priority service class or the second service class of the UE after receiving the modifying request carrying the priority service ID.

11. A Call Session Control Function, CSCF, for achieving multimedia priority service, **characterized by** comprising:
a first unit, configured to receive a Session Initiation Protocol, SIP, service request carrying a priority service ID from a User Equipment, UE;
a second unit, configured to
provide services for the UE according to a first priority service class preset if the SIP service request carries the priority service ID and does not carry a second priority service class; or
provide services for the UE according to the second priority service class if the SIP service request carries the priority service ID and the second priority service class.

12. The CSCF of claim 11, wherein, the CSCF is a Proxy CSCF, P-CSCF, and/or Servicing CSCF, S-CSCF, and/or Inquiry CSCF, I-CSCF.

13. The CSCF of claim 12, wherein the first priority service class of the UE is set in an HSS, further comprising:
a third unit, configured to
receive a register request from the UE;
send a request message for the user subscription information to the HSS;
receive a user subscription information response message carrying the first priority service class of the UE from the HSS; and
obtain the first priority service class of the UE from the user subscription information response message.

14. The CSCF of claim 13, wherein, the second priority service class of the UE is set up in a Subscriber ID Module, SIM;
the second unit is further configured to
compare the second priority service class of the UE obtained from the SIP service request with the first priority service class of the UE obtained from the HSS to decide whether they are identical;
if they are identical, provide services for the UE according to the first priority service class or according to the second priority service class; and
otherwise, return an SIP service request fail response to the UE and discarding the request, or provide services for the UE according to the first priority service class or according to the second priority service class.

15. The CSCF of claim 11, further comprising:
a fourth unit, configured to decide whether there are available resources, and
if yes, the second unit is configured to carry out normal processing of the SIP service request;
otherwise, the second unit is configured to provide services for the UE according to the first priority service class or according to the second priority service class.

16. The CSCF of claim 15, wherein, when the CSCF receives multiple SIP services requests carrying the priority service ID, further comprising
a fifth unit, configured to
list the SIP service requests in queue according to their arrival time and the second priority service classes;
if the SIP service requests do not contain the second priority service classes, list the SIP service requests in queue according to their arrival time and the first priority service classes;
when the CSCF has available resources, the second unit is configured to provide services for the UE according to the SIP service requests successively in their queue order.

17. The CSCF of claim 16, further comprising a timer, configured to be activated for each queuing request, and when the timer is overtime, the second unit is configured to delete the related request in queue and return an SIP service request fail message to the UE that initiates the request.

18. The CSCF of claim 15, wherein, when a SIP service request from a UE is being processed and the CSCF receives a new SIP service request from the UE, and there's no free resource for the new SIP service request, the second unit is configured to:
decide whether the second priority class of the multimedia service being processed for the UE is lower than the second priority service class of the new SIP service request received from the UE, and
if yes, end the multimedia service being processed, and use the resources released in the CSCF to process the new SIP service request of the UE;
otherwise, list the new SIP service request into queue and wait for available resources for processing it.

19. The CSCF of claim 15, wherein, when the CSCF in which an active multimedia service for a first UE exists receives a new SIP service request from a second UE and there's no free resource for the new SIP service request, the second unit is configured to:
decide whether the priority service class of the first UE is lower than the priority service class of the second UE, and
if yes, end the ongoing multimedia service, and use the resources released in the CSCF to process the new SIP service request of the second UE;
otherwise, list the new SIP service request into queue and wait for available resources for processing it.

20. The CSCF of claim 11, further comprising:
a sixth unit, configured to receive a service modifying request carrying the priority service ID from the UE; and
the second unit is further configured to carry out priority processing of the modifying request according to the first priority service class or the second service class of the UE after receive the modifying request carrying the priority service ID.

21. A system for achieving multimedia priority service, comprising a User Equipment, UE, and a Call Session Control Function, CSCF,
wherein the UE is configured to communicate with the CSCF according to any one of claims 11-20, and the UE comprises:
a first unit, configured to send a Session Initiation Protocol, SIP, service request carrying a priority service ID to the CSCF.

22. The system of claim 21, wherein the UE further comprises a second unit, configured to store a priority of the UE.

23. The system of claim 21 or 22, wherein the UE further comprises a third unit configured to send a service modifying request carrying the priority service ID to the CSCF.

## Patentansprüche

1. Verfahren zum Erhalten eines Multimediaprioritätsdienstes,
**dadurch gekennzeichnet , dass**
durch eine Call Session Control Function, CSCF, von einem Benutzergerät, UE (User Equipment), eine Session Initiation Protocol-Dienstanforderung, SIP-Dienstanforderung, empfangen wird, die eine Prioritätsdienst-ID trägt;
durch die CSCF Dienste für das UE gemäß einer voreingestellten ersten Prioritätsdienstklasse bereitgestellt werden, wenn die SIP-Dienstanforderung die Prioritätsdienst-ID trägt und keine zweite Prioritätsdienstklasse trägt; oder
durch die CSCF Dienste für das UE gemäß der zweiten Prioritätsdienstklasse bereitgestellt werden, wenn die SIP-Dienstanforderung die Prioritätsdienst-ID und die zweite Prioritätsdienstklasse trägt.

2. Verfahren nach Anspruch 1,
wobei die CSCF eine Proxy CSCF, P-CSCF, und/oder eine Service CSCF, S-CSCF, und/oder eine Inquiry CSCF, I-CSCF, ist.

3. Verfahren nach Anspruch 2, das ferner umfasst, dass,
wenn die CSCF die S-CSCF umfasst und die erste Prioritätsdienstklasse des UE in einem HSS gesetzt ist,
eine Registrierungsanforderung von dem UE empfangen wird;
eine Anforderungsnachricht hinsichtlich der Benutzerteilnahmeinformation an den HSS gesendet wird;
eine Benutzerteilnahmeinformations-Antwortnachricht, die die erste Prioritätsdienstklasse des UE trägt, von dem HSS empfangen wird; und
die erste Prioritätsdienstklasse des UE von der Benutzerteilnahmeinformations-Antwortnachricht erhalten wird.

4. Verfahren nach Anspruch 3,
wobei die zweite Prioritätsdienstklasse des UE in einem Subscriber ID Module, SIM, festgelegt wird;
wobei das Verfahren ferner umfasst, dass
die zweite Prioritätsdienstklasse des UE, die von der SIP-Dienstanforderung erhalten wird, mit der ersten Prioritätsdienstklasse des UE verglichen wird, die von dem HSS erhalten wird, um zu entscheiden, ob sie identisch sind;
wenn sie identisch sind, Dienste für das UE gemäß der ersten Prioritätsdienstklasse oder gemäß der zweiten Prioritätsdienstklasse bereitgestellt werden;
und andernfalls eine SIP-Dienstanforderung-Fehlgeschlagen-Antwort an das UE zurückgegeben wird und die Anforderung verworfen wird oder Dienste für das UE gemäß der ersten Prioritätsdienstklasse bereitgestellt werden.

5. Verfahren nach Anspruch 1, das ferner umfasst, dass
entschieden wird, ob es verfügbare Ressourcen gibt, und wenn dies der Fall ist, eine normale Verarbeitung der SIP-Dienstanforderung ausgeführt wird; andernfalls Dienste für das UE gemäß der ersten Prioritätsdienstklasse oder gemäß der zweiten Prioritätsdienstklasse bereitgestellt werden.

6. Verfahren nach Anspruch 1,
wobei, wenn die CSCF mehrere SIP-Dienstanforderungen empfängt, die die Prioritätsdienst-ID tragen, das Bereitstellen von Diensten für das UE umfasst, dass,
wenn die SIP-Dienstanforderungen die zweiten Prioritätsdienstklassen enthalten, die SIP-Dienstanforderungen gemäß ihrem Ankunftszeitpunkt und den zweiten Prioritätsdienstklassen in einer Warteschlange aufgelistet werden,
wenn die SIP-Dienstanforderungen die zweiten Prioritätsdienstklassen nicht enthalten, die SIP-Dienstanforderungen gemäß ihrem Ankunftszeitpunkt und den ersten Prioritätsdienstklassen in einer Warteschlange aufgelistet werden; und
wenn die CSCF verfügbare Ressourcen aufweist, Dienste für das UE gemäß den SIP-Dienstanforderungen sukzessiv in ihrer Warteschlangenreihenfolge bereitgestellt werden.

7. Verfahren nach Anspruch 5,
wobei ein Timer voreingestellt wird, und wenn die SIP-Dienstanforderungen in einer Warteschlange aufgereiht werden, das Verfahren ferner umfasst, dass
der Timer bei jeder Warteschlangenanforderung aktiviert wird, und wenn er abgelaufen ist, die in Verbindung stehende Anforderung in der Warteschlange gelöscht wird und eine SIP-Dienstanforderung-Fehlgeschlagen-Nachricht an das UE zurückgegeben wird, das die Anforderung initiiert.

8. Verfahren nach Anspruch 1,
wobei, wenn eine SIP-Dienstanforderung von einem UE verarbeitet wird und die CSCF eine neue SIP-Dienstanforderung von dem UE empfängt, und es keine freie Ressource für die neue SIP-Dienstanforderung gibt, das Bereitstellen von Diensten für das UE umfasst, dass
entschieden wird, ob die zweite Prioritätsklasse des Multimediadienstes, der für das UE verarbeitet wird, niedriger ist als die zweite Prioritätsdienstklasse der neuen SIP-Dienstanforderung, die von dem UE empfangen wird, und
wenn dies der Fall ist, der Multimediadienst, der verarbeitet wird, beendet wird und die in der CSCF freigegebenen Ressourcen verwendet werden, um die neue SIP-Dienstanforderung des UE zu verarbeiten; andernfalls die neue SIP-Dienstanforderung in einer Warteschlange aufgelistet wird und auf verfügbare Ressourcen für seine Verarbeitung gewartet wird.

9. Verfahren nach Anspruch 1,
wobei, wenn die CSCF, in der ein aktiver Multimediadienst für ein erstes UE existiert, eine neue SIP-Dienstanforderung von einem zweiten UE empfängt und es keine freie Ressource für die neue SIP-Dienstanforderung gibt, das Bereitstellen von Diensten für das UE umfasst, dass
entschieden wird, ob die Prioritätsdienstklasse des ersten UE niedriger ist als die Prioritätsdienstklasse des zweiten UE, und wenn dies der Fall ist, der aktuelle Multimediadienst beendet wird und die in der CSCF freigegebenen Ressourcen verwendet werden, um die neue SIP-Dienstanforderung des zweiten UE zu verarbeiten; andernfalls die neue SIP-Dienstanforderung in einer Warteschlange aufgelistet wird und auf verfügbare Ressourcen für seine Verarbeitung gewartet wird.

10. Verfahren nach Anspruch 1, das ferner umfasst, dass
eine Dienstmodifikationsanforderung, die die Prioritätsdienst-ID trägt, von dem UE empfangen wird;
eine Prioritätsverarbeitung der Modifikationsanforderung gemäß der ersten Prioritätsdienstklasse oder der zweiten Dienstklasse des UE ausgeführt wird, nachdem die Modifikationsanforderung, die die Prioritätsdienst-ID trägt, empfangen wurde.

11. Call Session Control Function, CSCF, zum Erhalten eines Multimediaprioritätsdienstes,
**gekennzeichnet durch**
eine erste Einheit, die ausgestaltet ist, um eine Session Initiation Protocol-Dienstanforderung, SIP-Dienstanforderung, die eine Prioritätsdienst-ID trägt, von einem Benutzergerät, UE, zu empfangen;
eine zweite Einheit, die ausgestaltet ist, um
Dienste für das UE gemäß einer voreingestellten ersten Prioritätsdienstklasse bereitzustellen, wenn die SIP-Dienstanforderung die Prioritätsdienst-ID trägt und keine zweite Prioritätsdienstklasse trägt; oder
Dienste für das UE gemäß der zweiten Prioritätsdienstklasse bereitzustellen, wenn die SIP-Dienstanforderung die Prioritätsdienst-ID und die zweite Prioritätsdienstklasse trägt.

12. CSCF nach Anspruch 11,
wobei die CSCF eine Proxy CSCF, P-CSCF, und/oder eine Servicing CSCF, S-CSCF, und/oder eine Inquiry CSCF, I-CSCF, ist.

13. CSCF nach Anspruch 12,
wobei die erste Prioritätsdienstklasse des UE in einem HSS gesetzt ist, ferner umfassend
eine dritte Einheit, die ausgestaltet ist, um
eine Registrierungsanforderung von dem UE zu empfangen;
eine Anforderungsnachricht hinsichtlich der Benutzerteilnahmeinformation an den HSS zu senden;
eine Benutzerteilnahmeinformations-Antwortnachricht, die die erste Prioritätsdienstklasse des UE trägt, von dem HSS zu empfangen; und
die erste Prioritätsdienstklasse des UE von der Benutzerteilnahmeinformations-Antwortnachricht zu erhalten.

14. CSCF nach Anspruch 13,
wobei die zweite Prioritätsdienstklasse des UE in einem Subscriber ID Module, SIM, festgelegt ist;
wobei die zweite Einheit ferner ausgestaltet ist, um
die zweite Prioritätsdienstklasse des UE, die von der SIP-Dienstanforderung erhalten wird, mit der ersten Prioritätsdienstklasse des UE zu vergleichen, die von dem HSS erhalten wird, um zu entscheiden, ob sie identisch sind;
wenn sie identisch sind, Dienste für das UE gemäß der ersten Prioritätsdienstklasse oder gemäß der zweiten Prioritätsdienstklasse bereitzustellen; und
andernfalls eine SIP-Dienstanforderung-Fehlgeschlagen-Antwort an das UE zurückzugeben und die Anforderung zu verwerfen oder Dienste für das UE gemäß der ersten Prioritätsdienstklasse oder gemäß der zweiten Prioritätsdienstklasse bereitzustellen.

15. CSCF nach Anspruch 11, ferner umfassend
eine vierte Einheit, die ausgestaltet ist, um zu entscheiden, ob es verfügbare Ressourcen gibt, wobei,
wenn dies der Fall ist, die zweite Einheit ausgestaltet ist, um eine normale Verarbeitung der SIP-Dienstanforderung auszuführen; andernfalls die zweite Einheit ausgestaltet ist, um Dienste für das UE gemäß der ersten Prioritätsdienstklasse oder gemäß der zweiten Prioritätsdienstklasse bereitzustellen.

16. CSCF nach Anspruch 15,
wobei, wenn die CSCF mehrere SIP-Dienstanforderungen empfängt, die die Prioritätsdienst-ID tragen, ferner eine fünfte Einheit umfasst ist, die ausgestaltet ist, um
die SIP-Dienstanforderungen gemäß ihrem Ankunftszeitpunkt und den zweiten Prioritätsdienstklassen in einer Warteschlange aufzulisten;
wenn die SIP-Dienstanforderungen die zweiten Prioritätsdienstklassen nicht enthalten, die SIP-Dienstanforderungen gemäß ihrem Ankunftszeitpunkt und den ersten Prioritätsdienstklassen in einer Warteschlange aufzulisten;
wobei, wenn die CSCF verfügbare Ressourcen aufweist, die zweite Einheit ausgestaltet ist, um Dienste für das UE gemäß den SIP-Dienstanforderungen sukzessiv in ihrer Warteschlangenreihenfolge bereitzustellen.

17. CSCF nach Anspruch 16,
ferner umfassend einen Timer, der ausgestaltet ist, um bei jeder Warteschlangenanforderung aktiviert zu werden, und wobei, wenn der Timer abgelaufen ist, die zweite Einheit ausgestaltet ist, um die in Verbindung stehende Anforderung in der Warteschlange zu löschen und eine SIP-Dienstanforderung-Fehlgeschlagen-Nachricht an das UE zurückzugeben, das die Anforderung initiiert.

18. CSCF nach Anspruch 15,
wobei, wenn eine SIP-Dienstanforderung von einem UE verarbeitet wird und die CSCF eine neue SIP-Dienstanforderung von dem UE empfängt und es keine freie Ressource für die neue SIP-Dienstanforderung gibt, die zweite Einheit ausgestaltet ist, um zu entscheiden, ob die zweite Prioritätsklasse des Multimediadienstes, der für das UE verarbeitet wird, niedriger als die zweite Prioritätsdienstklasse der neuen SIP-Dienstanforderung ist, die von dem UE empfangen wird, und
wenn dies der Fall ist, den Multimediadienst, der verarbeitet wird, zu beenden und die in der CSCF freigegebenen Ressourcen zu verwenden, um die neue SIP-Dienstanforderung des UE zu verarbeiten; andernfalls die neue SIP-Dienstanforderung in einer Warteschlange aufzulisten und auf verfügbare Ressourcen für seine Verarbeitung zu warten.

19. CSCF nach Anspruch 15,
wobei, wenn die CSCF, in der ein aktiver Multimediadienst für ein erstes UE existiert, eine neue SIP-Dienstanforderung von einem zweiten UE empfängt und es keine freie Ressource für die neue SIP-Dienstanforderung gibt, die zweite Einheit ausgestaltet ist, um zu entscheiden, ob die Prioritätsdienstklasse des ersten UE niedriger ist als die Prioritätsdienstklasse des zweiten UE, und
wenn dies der Fall ist, den aktuellen Multimediadienst zu beenden und die in der CSCF freigegebenen Ressourcen zu verwenden, um die neue SIP-Dienstanforderung des zweiten UE zu verarbeiten; andernfalls die neue SIP-Dienstanforderung in einer Warteschlange aufzulisten und auf verfügbare Ressourcen für seine Verarbeitung zu warten.

20. CSCF nach Anspruch 11, ferner umfassend
eine sechste Einheit, die ausgestaltet ist, um eine Dienstmodifikationsanforderung, die die Prioritätsdienst-ID trägt, von dem UE zu empfangen; wobei
die zweite Einheit ferner ausgestaltet ist, um eine Prioritätsverarbeitung der Modifikationsanforderung gemäß der ersten Prioritätsdienstklasse oder der zweiten Dienstklasse des UE auszuführen, nachdem die Modifikationsanforderung, die die Prioritätsdienst-ID trägt, empfangen wurde.

21. System zum Erhalten eines Multimediaprioritätsdienstes, umfassend ein Benutzergerät, UE, und eine Call Session Control Function, CSCF,
wobei das UE zum Kommunizieren mit der CSCF nach einem der Ansprüche 11 - 20 ausgestaltet ist, und das UE umfasst:
eine erste Einheit, die ausgestaltet ist, um eine Session Initiation Protocol-Dienstanforderung, SIP-Dienstanforderung, die eine Prioritätsdienst-ID trägt, an die CSCF zu senden.

22. System nach Anspruch 21,
wobei das UE ferner eine zweite Einheit umfasst, die ausgestaltet ist, um eine Priorität des UE zu speichern.

23. System nach Anspruch 21 oder 22,
wobei das UE ferner eine dritte Einheit umfasst, die ausgestaltet ist, um eine Dienstmodifikationsanforderung, die die Prioritätsdienst-ID trägt, an die CSCF zu senden.

## Revendications

1. Procédé permettant d'obtenir des services multimédia prioritaires, **caractérisé par le fait qu'**il consiste à :
recevoir, par une Fonction de Contrôle de Session d'Appel, CSCF (Call Session Control Fonction), une demande de service à Protocole d'Ouverture de Session, SIP (Session Initiation Protocol), transportant un ID (Identificateur) de service prioritaire, en provenance d'un Équipement d'Utilisateur, UE (User Equipment) ;
fournir, au moyen de la fonction CSCF, des services à UE en conformité avec une première classe de services prioritaires prédéfinie si la demande de service SIP transporte l'ID de service prioritaire et ne transporte pas de deuxième classe de service prioritaire ; ou
fournir, au moyen de la fonction CSCF, des services à l'UE conformément à la deuxième classe de service prioritaire si la demande de service SIP transporte l'ID de service prioritaire et la deuxième classe de service prioritaire.

2. Procédé selon la revendication 1, dans lequel la fonction CSCF est une fonction CSCF Mandataire, P-CSCF (Proxy CSCF), et/ou une fonction CSCF de Service, S-CSCF (Service CSCF), et/ou une fonction CSCF d'Interrogation, I-CSCF (Inquiry CSCF).

3. Procédé selon la revendication 2, consistant en outre à :
lorsque la fonction CSCF comprend la fonction S-CSCF et lorsque la première classe de service prioritaire de l'UE est définie comme étant un HSS (Home Subscriber Server pour Serveur d'Abonné de Départ),
recevoir une demande d'enregistrement en provenance de l'UE ;
envoyer au HSS un message de demande d'information d'abonnement d'utilisateur ;
recevoir en provenance du HSS un message de réponse contenant l'information d'abonnement de l'utilisateur et transportant la première classe de service prioritaire de l'UE ; et
obtenir la première classe de service prioritaire de l'UE à partir du message de réponse contenant l'information d'abonnement de l'utilisateur.

4. Procédé selon la revendication 3, dans lequel la deuxième classe de service prioritaire de l'UE est établie dans un Module d'ID d'Abonné, SIM (Subscriber ID Module) ;
le procédé consistant en outre à :
comparer la deuxième classe de service prioritaire de l'UE obtenue à partir de la demande de service SIP à la première classe de service prioritaire de l'UE obtenue du HSS pour décider si elles sont identiques ;
si elles sont identiques, fournir des services à l'UE en conformité avec la première classe de service prioritaire ou en conformité avec la deuxième classe de service prioritaire ;
et dans le cas contraire, renvoyer à l'UE une réponse d'échec à la demande de service SIP et rejeter la demande, ou fournir des services à l'UE en conformité avec la première classe de service prioritaire.

5. Procédé selon la revendication 1, consistant en outre à :
décider s'il y a des ressources disponibles et, si oui, effectuer un traitement normal de la demande de service SIP ; et dans le cas contraire, fournir à l'UE des services en conformité avec la première classe de service ou en conformité avec la deuxième classe de service.

6. Procédé selon la revendication 1, dans lequel, lorsque la fonction CSCF reçoit de multiples demandes de service SIP transportant l'ID de service prioritaire, la fourniture de services à l'UE consiste à :
si les demandes de service SIP contiennent bien les deuxièmes classes de services prioritaires, introduire les demandes de service SIP dans une file d'attente en fonction de leur temps d'arrivée et des deuxièmes classes de services prioritaires,
si les demandes de service SIP ne contiennent pas les deuxièmes classes de service prioritaire, introduire les demandes de service SIP dans une file d'attente en fonction de leur temps d'arrivée et des premières classes de service prioritaire ; et
lorsque la fonction CSCF a des ressources disponibles, fournir à l'UE des services en conformité avec les demandes de service SIP dans l'ordre successif de leur file d'attente.

7. Procédé selon la revendication 5, dans lequel un compteur de temps est préréglé et lorsque les services SIP sont mis en file d'attente, le procédé consiste en outre à :
activer le compteur de temps pour chaque demande de mise en file d'attente, et lorsqu'il atteint son temps limite, effacer la demande associée dans la file d'attente et renvoyer à l'UE qui émet la demande un message d'échec à la demande de service.

8. Procédé selon la revendication 1, dans lequel, lorsqu'une demande de service SIP provenant d'un UE est traitée et lorsque la fonction CSCF reçoit de l'UE une nouvelle demande de service SIP, et lorsqu'il n'y a pas de ressource libre pour la nouvelle demande de service SIP, la fourniture de services à UE consiste à :
décider si la deuxième classe prioritaire du service multimédia qui est en cours de traitement pour l'UE est inférieure à la deuxième classe de service prioritaire de la nouvelle demande de service SIP reçue en provenance de l'UE, et
si oui, interrompre le service multimédia en cours de traitement et utiliser les ressources libérées par la fonction CSCF pour traiter la nouvelle demande de service SIP de l'UE ; et dans le cas contraire, introduire la nouvelle demande de service SIP dans une file d'attente et attendre que des ressources soient disponibles pour la traiter.

9. Procédé selon la revendication 1, dans lequel, lorsque la fonction CSCF dans laquelle il existe un service multimédia actif destiné à un premier UE reçoit une nouvelle demande de service SIP en provenance d'un deuxième UE et lorsqu'il n'y a pas de ressource libre pour la nouvelle demande de service SIP, la fourniture de services à l'UE consiste à :
décider si la classe de service prioritaire du premier UE est inférieure à la classe de service prioritaire du deuxième UE et, si oui, interrompre le service multimédia en cours, et utiliser les ressources libérées par la fonction CSCF pour traiter la nouvelle demande de service SIP du deuxième UE ; et dans le cas contraire, introduire la nouvelle demande de service SIP dans une file d'attente et attendre que des ressources soient disponibles pour la traiter.

10. Procédé selon la revendication 1, consistant en outre à :
recevoir de l'UE une demande de modification de service transportant l'ID de service prioritaire ;
effectuer un traitement prioritaire de la demande de modification en conformité avec la première classe de service prioritaire ou avec la deuxième classe de service prioritaire de l'UE après avoir reçu la demande de modification transportant l'ID de service prioritaire.

11. Fonction de Contrôle de Session d'Appel, CSCF, permettant d'obtenir un service multimédia prioritaire, **caractérisée par le fait qu'**elle comprend :
une première unité, configurée pour recevoir une demande de service à Protocole d'Ouverture de Session, SIP, transportant un ID de service prioritaire en provenance d'un Équipement d'Utilisateur, UE ;
une deuxième unité, configurée pour
fournir des services à l'UE en conformité avec une première classe de service prioritaire prédéfinie si la demande de service SIP transporte l'ID de service prioritaire et ne transporte pas de deuxième classe de service prioritaire ; ou
fournir des services à l'UE en conformité avec la deuxième classe de service prioritaire si la demande de service SIP transporte l'ID de service prioritaire et la deuxième classe de service prioritaire.

12. Fonction CSCF selon la revendication 11, dans laquelle la fonction CSCF est une fonction CSCF Mandataire, P-CSCF, et/ou une fonction CSCF de Service, S-CSCF, et/ou une fonction CSCF d'Interrogation, I-CSCF.

13. Fonction CSCF selon la revendication 12, dans laquelle la première classe de service prioritaire de l'UE est définie dans un HSS, et comprenant en outre :
une troisième unité, configurée pour :
recevoir de l'UE une demande d'enregistrement ;
envoyer au HSS un message de demande d'information d'abonnement de l'utilisateur ;
recevoir en provenance du HSS un message de réponse contenant l'information d'abonnement de l'utilisateur et transportant la première classe de service prioritaire de l' UE ; et
obtenir la première classe de service prioritaire de l'UE à partir du message de réponse contenant l'information d'abonnement de l'utilisateur.

14. Fonction CSCF selon la revendication 13, dans laquelle la deuxième classe de service prioritaire de l'UE est définie dans un Module d'ID d'Abonné, SIM ;
la deuxième unité étant en outre configurée pour :
comparer la deuxième classe de service prioritaire de l'UE obtenue à partir de la demande de service SIP à la première classe de service prioritaire de l'UE obtenue à partir du HSS pour décider si elles sont identiques ;
si elles sont identiques, fournir des services à l'UE en conformité avec la première classe de service prioritaire ou en conformité avec la deuxième classe de service prioritaire ; et
dans le cas contraire, renvoyer à l'UE une réponse d'échec à la demande de service SIP et rejeter la demande, ou fournir des services à l'UE en conformité avec la première classe de service prioritaire ou en conformité avec la deuxième classe de service prioritaire.

15. Fonction CSCF selon la revendication 11, comprenant en outre :
une quatrième unité, configurée pour décider s'il y a des ressources disponibles, et
si oui, la deuxième unité étant configurée pour effectuer un traitement normal de la demande de service SIP ;
et dans le cas contraire, la deuxième unité étant configurée pour fournir à l'UE des services en conformité avec la première classe de service ou en conformité avec la deuxième classe de service.

16. Fonction CSCF selon la revendication 15, dans laquelle, lorsque la fonction CSCF reçoit de multiples demandes de service SIP transportant l'ID de service prioritaire, elle comprend en outre :
une cinquième unité, configurée pour
introduire les demandes de service SIP dans une file d'attente en fonction de leur temps d'arrivée et des deuxièmes classes de service prioritaire,
si les demandes de service SIP ne contiennent pas les deuxièmes classes de services prioritaires, introduire les demandes de service SIP dans une file d'attente en fonction de leur temps d'arrivée et des premières classes de service prioritaire ;
lorsque la fonction CSCF a des ressources disponibles, la deuxième unité est configurée pour fournir à l'UE des services en conformité avec les demandes de service SIP dans l'ordre successif de leur file d'attente.

17. Fonction CSCF selon la revendication 16, comprenant en outre un compteur de temps, configuré pour être activé lors de chaque demande de mise en file d'attente et, lorsque le compteur de temps a atteint son temps limite, la deuxième unité étant configurée pour effacer la demande associée dans la file d'attente et renvoyer à l'UE qui déclenche la demande un message d'échec à la demande de service SIP.

18. Fonction CSCF selon la revendication 15, dans laquelle, lorsqu'une demande de service SIP provenant d'un UE est en cours de traitement et lorsque la fonction CSCF reçoit de l'UE une nouvelle demande de service SIP, et lorsqu'il n'y a pas de ressource pour la nouvelle demande de service SIP, la deuxième unité est configurée pour :
décider si la deuxième classe prioritaire du service multimédia en cours de traitement pour l'UE est inférieure à la deuxième classe de service prioritaire de la nouvelle demande de service SIP reçue de l'UE, et
si oui, interrompre le service multimédia en cours de traitement et utiliser les ressources libérées par la fonction CSCF pour traiter la nouvelle demande de service SIP de l'UE ;
dans le cas contraire, introduire la nouvelle demande de service SIP dans la file d'attente et attendre que des ressources soient disponibles pour la traiter.

19. Fonction CSCF selon la revendication 15, dans laquelle, lorsque la fonction CSCF dans laquelle il existe un service multimédia actif destiné à un premier UE reçoit d'un deuxième UE une nouvelle demande de service SIP, et lorsqu'il n'y a pas de ressource libre pour la nouvelle demande de service SIP, la deuxième unité est configurée pour :
décider si la classe de service prioritaire du premier UE est inférieure à la classe de service prioritaire du deuxième UE et,
si oui, interrompre le service multimédia en cours, et utiliser les ressources libérées dans la fonction CSCF pour traiter la nouvelle demande de service SIP du deuxième UE ;
dans le cas contraire, introduire la nouvelle demande de service SIP dans une file d'attente et attendre que des ressources soient disponibles pour la traiter.

20. Fonction CSCF selon la revendication 11, comprenant en outre :
une sixième unité, configurée pour recevoir de l'UE une demande de modification de service transportant l'ID de service prioritaire ; et
la deuxième unité étant en outre configurée pour effectuer un traitement prioritaire de la demande de modification en conformité avec la première classe de service prioritaire ou avec la deuxième classe de service prioritaire de l'UE après avoir reçu la demande de modification transportant l'ID de service prioritaire.

21. Système permettant d'obtenir un service multimédia prioritaire, comprenant un Équipement d'Utilisateur, UE, et une Fonction de Contrôle de Session d'Appel, CSCF,
dans lequel l'UE est configuré pour communiquer avec la fonction CSCF selon l'une quelconque des revendications 11-20, et dans lequel l'UE comprend :
une première unité, configurée pour envoyer à la fonction CSCF une demande de service de Protocole d'Ouverture de Session, SIP, transportant un ID de service prioritaire.

22. Système selon la revendication 21, dans lequel l'UE comprend en outre une deuxième unité configurée pour stocker une priorité de l'UE.

23. Système selon la revendication 21 ou 22, dans lequel l'UE comprend en outre une troisième unité configurée pour envoyer à la fonction CSCF une demande de modification de service transportant l'ID de service prioritaire.
